# EUROPÄISCHE PATENTANMELDUNG

(11) **EP 1 282 209 A1**
(43) Veröffentlichungstag der Anmeldung: **05.02.2003**
(21) Anmeldenummer: 02016430.7
(22) Anmeldetag: 22.07.2002
(51) Int. Cl.: H02B 1/20

(54) **Sammelschiene für Reiheneinbaugeräte**

(30) Priorität: 03.08.2001 DE 10138256; 26.09.2001 DE 10147488
(71) Anmelder: SIEMENS AKTIENGESELLSCHAFT, 80333 München (DE)
(72) Erfinder: Fuhrmann, Walter, 97348 Rödelsee (DE)

(57) **Zusammenfassung**

Um eine universelle Verschaltung von Reiheneinbaugeräten (2) zu ermöglichen, ist eine Sammelschiene (1) vorgesehen, die zumindest für einen Teil der zugeordneten Reiheneinbaugeräte (2) eine Schalteinrichtung (8) aufweist, die eine flexible Zuordnung von Reiheneinbaugerät (2) und Phasenleitung oder Versorgungsleitung ermöglicht.

## Beschreibung

In Spannungsversorgungsanlagen für Niederspannung ist es üblich, Reiheneinbaugeräte, z.B. Leitungsschutzschalter oder Fehlerstromschutzschalter, gemeinsam über Verbindungsschienen oder auch sogenannte Sammelschienen miteinander zu verbinden. Diese sind in der Regel starr ausgeführt und dienen zur Verbindung der jeweiligen Reiheneinbaugeräte miteinander. Dabei können die jeweiligen Reiheneinbaugeräte auch mit verschiedenen Phasen des Versorgungsnetzes verbunden werden. Derartige Sammelschienen sind beispielsweise aus dem Katalog 12.1 2001, der Fa. Siemens, Bestell-Nr. E86060-K8210-A101-A2, bekannt. Dort sind beispielsweise auf der Seite 2/40 verschiedenste Sammelschienen gezeigt.

Bei Verwendung unterschiedlicher Geräte, z.B. bei einem ein- oder mehrpoligen Schalter, einem Fehlerstromschutz- oder Leitungsschutzschalter, ist es erforderlich, unterschiedliche Typen von Sammelschienen zur Verbindung der jeweiligen Reiheneinbaugeräte auf verschiedenen Phasen zu verwenden. Bei speziellen Anwendungen ist eine direkte Verschienung überhaupt nicht möglich.

Um eine flexible Verschaltung der Reiheneinbaugeräte zu ermöglichen, ist es bekannt, die jeweiligen Reiheneinbaugeräte über flexible Leitungen und zusätzliche Phasenschalter an eine Sammelschiene anzuschließen. Derartige Phasenschaltmodule sind beispielsweise aus der GE-Druckschrift "Modular 630 K" auf der Seite 16 bekannt. Derartige Einrichtungen sind aufwendig in der Verschaltung und benötigen zusätzlich Einbauplätze in einer Schalttafel.

Der Erfindung liegt die Aufgabe zugrunde, eine einfach ausgestaltete Sammelschiene für Reiheneinbaugeräte bereitzustellen, die bei geringem Platzbedarf eine höchstmögliche Flexibilität in der Verschaltung bietet.

Die Lösung der Aufgabe gelingt erfindungsgemäß durch die Merkmale des Anspruchs 1.

Hierbei ist nur noch eine Verteilerschiene je Modulbreite und Stromstärke für die unterschiedlichen Einbaugeräte nötig. Der Anschluss ist dabei sehr einfach. In der Anwendung können die Reiheneinbaugeräte beliebig an die Sammelschiene angeschlossen werden. Die elektrische Verschaltung und Zuordnung zu den jeweiligen Phasen oder sonstigen Leitungen erfolgt dann durch einfaches Einstellen der jeweiligen Schalteinrichtungen.

Ggf. kann auch eine Busleitung, z.B. zur Kommunikation oder zur Steuerung, in diese Sammelschiene integriert sein.

Die Anschlussleitungen der Sammelschiene können beliebig über einen Schraub- oder schraubenlosen Anschluss ausgeführt sein. Wesentlich ist dabei, dass die gewünschte Art des Anschlusses oder des Zugangs zum Reiheneinbaugerät (L1, L2, L3, N, oder Bus) über ein Betätigungselement, insbesondere die Schalteinrichtung, gewählt werden kann.

Der wesentliche Vorteil liegt darin, dass eine einfache, universell einsetzbare Verteilerschiene zum Einsatz kommt. Hierdurch werden die Typenvielfalt, die Lagerhaltung und die Herstellungskosten der Gesamtverteileinrichtung wesentlich gesenkt. Durch die universelle Sammel- oder Phasenschiene ist also ein verbesserter Kundennutzen erzielbar. Die Sammel- oder Phasenschiene erfordert dabei keine spezielle Disposition, da diese universell anwendbar ist. Sie reduziert dabei Fehlerquellen und ist flexibel bei der Anlagenkonfiguration. Ggf. können auch nachträglich Anlagenumstellungen durch einfaches Umschalten vorgenommen werden. Ein Ausführungsbeispiel der Erfindung, weitere Vorteile und Details werden nachfolgend anhand der Zeichnung näher gezeigt.

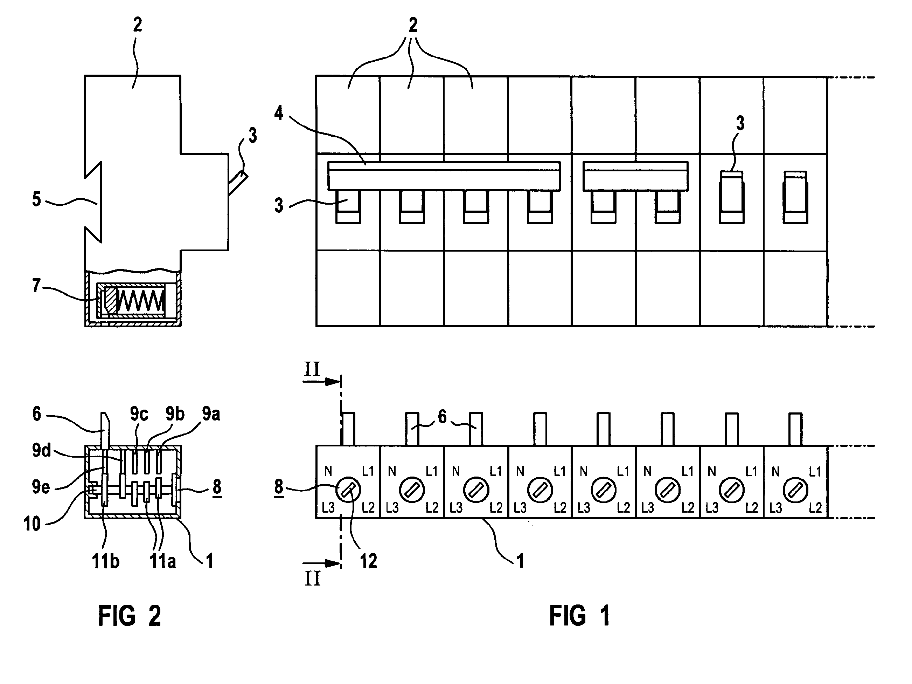

Die Figuren 1 und 2 zeigen eine Anordnung mit aneinander angeordneten Reiheneinbaugeräten, denen eine Sammelschiene 1 zugeordnet ist. Die Anordnung ist dabei gemäß FIG 1 in der Draufsicht und FIG 2 in der Seitenansicht gezeigt, wobei in der Seitenansicht die Sammelschiene 1 und ein Teil eines Reiheneinbaugerätes in einer Schnittdarstellung gezeigt sind.

In der nachfolgenden Beschreibung wird auf beide Figuren gleichermaßen Bezug genommen.

Die Anordnung zeigt eine Anzahl von Reiheneinbaugeräten 2 mit Bedienknebeln 3, die nebeneinander angeordnet sind. Es kann sich hierbei beispielsweise um Sicherungen, Leitungsschutzschalter oder Fehlerstromschutzeinrichtungen handeln. Ggf. können für mehrphasige Anwendungen die Bedienknebel 3 über einen gemeinsamen Bediengriff 4 miteinander verbunden sein. Die Reiheneinbaugeräte 2 können über eine entsprechende Haltevorrichtung, insbesondere eine Aussparung 5, zum Aufstecken auf eine Hutschiene ausgeführt sein. Den Reiheneinbaugeräten 2 ist die Sammelschiene 1 zugeordnet. Diese weist eine Aufteilung im Rastermaß der Reiheneinbaugeräte 2 auf, die bevorzugt nach DIN 43880 oder auch nach einem anderen Aufteilungsmaß, insbesondere einer halben Einbaubreite nach der vorgenannten DIN, ausgeführt sein können.

Zum Anschluss der Reiheneinbaugeräte 2 ist dabei jeweils eine Anschlussleitung oder ein Anschlusskontakt 6 vorgesehen. Dieser ist zum Eingriff in die jeweilige Anschlussklemme 7 des Reiheneinbaugerätes 2 ausgeführt. Die Anschlussklemmen 7 können dabei allgemein als Schraub- oder auch als schraubenlose Anschlussvorrichtung, z.B. als Klemmvorrichtung oder Steckklemme, ausgeführt sein.

Wesentlich für die neue Anschluss- oder Sammelschiene 1 ist dabei, dass zumindest für einen Teil der jeweiligen Reiheneinbaugeräte zwei oder im Maximalfall auch für alle eine Schalteinrichtung 8 vorgesehen ist. Diese dient dazu, den entsprechenden Anschlusskontakt oder die Anschlussleitung 6 des zugeordneten Einbauplatzes mit einer in der Sammelschiene 1 angeordneten Phasenleitung 9a bis 9e zu verbinden. Die Schalteinrichtung 8 an sich kann dabei beliebig nach dem Stand der Technik ausgeführt sein.

Vorliegend ist rein beispielhaft ein Schaltglied 10 gezeigt, das je Sammelschienenleitung 9a bis 9e ein zugeordnetes Kontaktstück oder Kontaktmesser 11a aufweist. Das Schaltglied 10 in Form einer drehbaren Schaltwelle kann dazu beispielsweise einen Betätigungsschlitz 12 aufweisen, der einen Eingriff eines Schraubenziehers ermöglicht. Je nach Drehstellung des Schaltglieds 10 wird dann der permanent mit dem Anschlusskontakt 6 verbundene Kontaktteller 11b mit einer der Leitungen 9a bis 9d verbunden. In einer weiteren Ausführungsvariante kann das Schaltglied 10 an Stelle der drehbaren Schaltwelle mit einer kodierten einsteckbaren Schaltachse versehen sein. Dabei kann je nach Kodierung und Positionierung des Steckers eine gewünschte Verschaltung zwischen der Sammelschiene 1, einem oder mehrerer der Sammel- oder Phasenleitungen 9a-9e und zumindest einem der Reiheneinbaugeräte 2 eingestellt werden.

Hierzu kann auch auf der Stirnseite eines Gehäuses beim Betätigungsschlitz 12 eine entsprechende Beschriftung zum Ablesen der jeweiligen Schaltstellung vorgesehen sein.

Die stirnseitige Betätigung ermöglicht dabei eine einfache Bedienung der gesamten Anordnung. In der Praxis kann diese dabei von Sammelschiene 1 mit Reiheneinbaugeräten 2 einfach zusammengesteckt und zusammengeschraubt werden. Erst nachträglich erfolgt dann die jeweilige elektrische Verschaltung durch eine entsprechende Einstellung der Betätigungselemente. Dies ist insbesondere dann von Interesse, wenn nachträglich durch den Betrieb ggf. eine Überlastung von einzelnen Phasen festgestellt wird, so dass auf einfache Weise eine nachträgliche Phasenaufteilung an Ab- oder Zugängen für die Energieverteilung erzeugt werden kann. Hierbei können z.B. auch im Bereich von Wohnhäusern Zuordnungen von Zimmern auf eine Phase erzeugt werden, so dass beispielsweise bekannte Probleme bei einer Informationsübertragung für Babyfonanlagen beseitigt werden können.

Ggf. kann die Sammelschiene 1 auch noch zusätzliche Leitungen oder Schalteinrichtungen für die Verbindung von Busdaten umfassen, so dass beispielsweise auch intelligente Reiheneinbaugeräte miteinander verschaltet werden können.

In einer weiteren Ausführungsform kann die Sammelschiene 1 ggf. auch modular aufgebaut sein, so dass die jeweiligen Tei1e oder Einbauplätze modulartig miteinander über Steckverbindungen nach Art von Bausteinen verbunden werden können. Auf diese Weise ist eine höchstmögliche Flexibilität der gesamten Anordnung gegeben.

## Patentansprüche

1. Sammelschiene (1) für Reiheneinbaugeräte (2),
- mit einer vorgegebenen Anzahl von Sammelleitungen (9a-9e);
- mit einer vorgegebenen Anzahl von Anschlussplätzen und Anschlussleitungen (6) für anzuschließende korrespondierende Reiheneinbaugeräte (2);
- mit jeweils einer Schalteinrichtung (8) für zumindest einen der Anschlussplätze, durch die eine elektrische Verbindung jeweils einer der Anschlussleitungen (6) zu einer der Sammelleitungen (9a-9e) einstellbar ist.

2. Sammelschiene nach Anspruch 1,
- mit einer aus den Sammelleitungen (9a-9e), den Anschlussplätzen und den Schalteinrichtungen (8) gebildeten Baueinheit.

3. Sammelschiene nach Anspruch 1,
- mit einer Anzahl der Sammelleitungen (9a-9e) entsprechend einem dreiphasigen Drehstromnetz.

4. Sammelschiene nach Anspruch 1 und/oder 2,
- mit einer Aufteilung in Anschluss-/Reiheneinbauplätze für anschließbare Reiheneinbaugeräte (2);
- mit modular aneinander steckbaren jeweils aus den Anschluss-/Reiheneinbauplätzen gebildeten Elementen.

5. Sammelschiene nach einem der Ansprüche 1 bis 3,
- mit einer Einstellung der elektrische Verbindung mittels eines in der Schalteinrichtung (8) angeordneten Schaltglieds (10) mit Kontaktstücken (11a).

6. Sammelschiene nach Anspruch 5,
- mit einer Ausbildung des Schaltglieds (10) in Form einer einsteckbaren Schaltachse.

7. Sammelschiene nach Anspruch 5,
- mit einer Ausbildung des Schaltglieds (10) in Form einer drehbaren Schaltwelle.

8. Sammelschiene nach einem der vorhergehenden Ansprüche,
- mit einer zu den Sammelleitungen (9a-9e) zusätzlichen Busleitung;
- mit einer weiteren mit Busanschlüssen versehenen Schalteinrichtung zum Verbinden mit der Busleitung.
